# EUROPEAN PATENT SPECIFICATION

(11) **EP 3 817 115 B1**
(45) Date of publication and mention of the grant of the patent: **07.06.2023**
(21) Application number: 19825870.9
(22) Date of filing: 12.04.2019
(51) Int. Cl.: H01M 8/2432, H01M 8/2483, H01M 8/248, H01M 8/12

(54) **FUEL CELL STRUCTURE**
BRENNSTOFFZELLENSTRUKTUR
STRUCTURE DE PILES À COMBUSTIBLE

(30) Priority: 29.06.2018 KR 20180075794
(43) Date of publication of application: 05.05.2021
(73) Proprietor: MICO POWER LTD, Gyeonggi-do 17567 (KR)
(72) Inventor: PARK, Jin Ah, Pyeongtaek-si Gyeonggi-do 17870 (KR); CHOI, Song Ho, Hwaseong-si Gyeonggi-do 18477 (KR)
(74) Representative: Laine IP Oy
(86) International application number: PCT/KR2019/004440
(87) International publication number: WO 2020/004786

(56) References cited:
- JP-A- 2002 050 391
- JP-A- 2005 044 727
- JP-A- 2014 123 498
- KR-A- 20150 001 402
- KR-A- 20160 137 573
- US-A1- 2009 311 570
- US-A1- 2016 372 778
- US-A1- 2018 138 540

## Description

### BACKGROUND

### 1. Field

The present disclosure relates to a fuel cell structure, more particularly, to a solid oxide fuel cell structure in which fuel and air are stably sealed.

### 2. Description of Related Art

Fuel cells that generate electricity via electrochemical reactions of hydrogen and oxygen have a simple energy conversion step, and a high-efficiency, and eco-friendly characteristics of pollution-free generator and thus are actively researched.

In particular, a solid oxide fuel cell (SOFC) among the fuel cells operates at a high temperature of about 600 to 1000°C using ceramic as an electrolyte. Among various types of fuel cells such as molten carbonate fuel cell (MCFC), phosphoric acid fuel cell (PAFC), polymer electrolyte fuel cell (PEFC), etc., the solid oxide fuel cell (SOFC) is the most efficient and less polluting, and allows combined power generation without need for a fuel reformer.

In this solid oxide fuel cell structure, fuel and air supply pipes and discharge pipes are directly connected to an end plate or a manifold constituting a fuel cell stack. High temperature-resistant seals made of glass are mainly used to seal fuel and air stably even at high temperatures.

However, when the fuel and air supply pipes and discharge pipes are directly connected to the fuel cell stack, the fuel cell stack is disposed at an installation location and the supply pipes and the discharge pipes of the fuel and air are connected thereto. Thus, the installation work takes a lot of time and the installation work is not easy due to space constraints.

Some example fuel cells are described in US 2018/138540, US 2016/372778 and US 2009/311570.

In order to solve the above problem, when connecting the supply pipes and discharge pipes of the fuel and air to a component other than the fuel cell stack, the fuel and air may be sealed between the fuel cell stack and the component.

### SUMMARY

### 1. Technical purposes

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

A purpose of the present disclosure is to provide a fuel cell structure which is easily installed and replaced, and in which fuel and air are reliably sealed.

What the Purposes in accordance with the present disclosure are not limited to the above-mentioned purpose. Other purposes and advantages in accordance with the present disclosure as not mentioned above may be understood from following descriptions and more clearly understood from embodiments in accordance with the present disclosure. Further, it will be readily appreciated that the purposes and advantages in accordance with the present disclosure may be realized by features and combinations thereof as disclosed in the claims.

### 2. Technical solutions

An aspect of the present disclosure provides a fuel cell structure characterized in that the fuel cell structure comprises: at least one fuel cell stack including: an upper end plate having a first pressing plate, and at least one first fastened portion protruding in a horizontal direction from at least one lateral face of the first pressing plate; a lower end plate having a second pressing plate opposite to the first pressing plate and at least one second fastened portion protruding in a horizontal direction from at least one of lateral face of the second pressing plate; and a stack structure of single cells disposed between the first pressing plate and the second pressing plate; a support including a support plate disposed on a bottom of the fuel cell stack to support the fuel cell stack; and a fastener extending through the first fastened portion, the second fastened portion and the support plate to fasten the fuel cell stack to the support.

In one implementation, the support plate has: a fuel supply hole defined therein communicating a fuel supply pipe suppling fuel to the fuel cell stack with an inlet of a fuel channel inside the fuel cell stack; and a fuel discharge hole defined therein communicating a fuel discharge pipe discharging fuel from the fuel cell stack to an outlet of the fuel channel, wherein the fuel cell structure further comprises a sealing member disposed between the fuel cell stack and the support plate, wherein the sealing member includes at least one high temperature-resistant seal and a compressive seal to seal a space around the fuel supply hole and the inlet of the fuel channel and a space around the fuel discharge hole and the outlet of the fuel channel.

In one implementation, the compressive seal is disposed between a top face of the support plate and a bottom face of the lower end plate and has a ring shape to surround a top of at least one of the fuel supply hole and the fuel discharge hole, wherein the high temperature-resistant seal includes a ring-shaped inner high temperature-resistant seal surrounded with the compressive seal and disposed between the top face of the support plate and the bottom face of the lower end plate, wherein the ring-shaped inner high temperature-resistant seal surrounds a top of at least one of the fuel supply hole and the fuel discharge hole.

In one implementation, the high temperature-resistant seal includes a ring-shaped outer high temperature-resistant seal surrounding the compressive seal and disposed between the top face of the support plate and the bottom face of the lower end plate, wherein the ring-shaped inner high temperature-resistant seal surrounds a top of at least one of the fuel supply hole and the fuel discharge hole.

In one implementation, each of the inner high temperature-resistant seal and the outer high temperature-resistant seal is made of a glass material or a composite material of glass and ceramic, wherein the compressive seal is made of ceramic material.

In one implementation, the compressive seal includes first and second compressive seals surrounding tops of the fuel supply hole and the fuel discharge hole, respectively, wherein the inner high temperature-resistant seal includes first and second inner high temperature-resistant seals surrounded with the first and second compressive seals, respectively, wherein the outer high temperature-resistant seal includes first and second outer high temperature-resistant seals surrounding the first and second compressive seals, respectively.

In one implementation, a first movement-prevention groove is defined in a top face of the support plate into which at least a portion of the lower end plate is inserted.

In one implementation, a top face of the support plate has a first region extending along an edge portion thereof, and a second region surrounded with the first region and, protruding in a stepwise manner upwardly of the first region, wherein a second movement-prevention groove into which the second region is inserted is defined in a bottom face of the lower end plate.

In one implementation, the sealing member is disposed between the second region and a bottom face of the second movement-prevention groove.

### 3. Technical effects

Effects in accordance with the present disclosure may be as follows but may not be limited thereto.

According to the solid oxide fuel cell structure according to the present disclosure, the sealing member includes the compressive seal and the high temperature-resistant seal. Thus, even when an application area of the high temperature-resistant seal is reduced, sealing effect of fuel and air may be stably secured. Therefore, the application area of the high temperature-resistant seal may be reduced. As a result, the fuel cell stack may be easily detached from the support at room temperature.

Moreover, when glass is used as material for the high temperature-resistant seal, there is a problem that sealing effect decreases at low temperatures. However, in the fuel cell structure according to the present disclosure, the sealing member includes the compressive seal and the high temperature-resistant seal. Thus, the fuel cell structure may reliably seal the fuel and air even at relatively low temperatures below a melting temperature of the high temperature-resistant seal.

Further, connecting the fuel supply/discharge pipe and the air supply/discharge pipe not to the fuel cell stack but to the support capable of supporting the fuel cell stack may allow a process of installing and uninstalling the fuel cell structure and replacing the stack to be simplified. Placing the sealing member between the support and the fuel cell stack may allow the fuel and air to be sealed stably.

Further, the fastened portion may be formed at each of the upper end plate and the lower end plate of the fuel cell stack, and the fuel cell stack and the support may be fastened to each other via the fastener extending through the fastened portion. Thus, the sealing member disposed between the fuel cell stack and the support may be prevented from being damaged, which may otherwise occur when the fuel cell stack is moved. Further, the first movement-prevention groove that may fixedly accommodate the fuel cell stack may be defined in the top face of the support, or the second movement-prevention groove in which the protruding region of the support may be fixedly inserted may be defined in the bottom face of the lower end plate, thereby to more reliably prevent the fuel cell stack from moving relative to the support.

In addition to the effects as described above, specific effects in accordance with the present disclosure will be described together with the detailed description for carrying out the disclosure.

### BRIEF DESCRIPTIONS OF DRAWINGS

FIG. 1 is a perspective view for describing a fuel cell structure according to an embodiment of the present disclosure.
FIG. 2 is a cross-sectional view for describing the fuel cell structure shown in FIG. 1.
FIG. 3 is a partial plan view for describing a sealing member shown in FIG. 2.
FIG. 4 is a cross-sectional view of a fuel cell stack shown in FIGS. 1 and 2.
FIG. 5 is a plan view for describing upper and lower end plates of the fuel cell stack.
FIG. 6 is a cross-sectional view for describing an embodiment of a sealing structure between a support and the fuel cell stack.
FIG. 7 is a cross-sectional view for describing a fuel cell structure according to an embodiment of the present disclosure.

### DETAILED DESCRIPTIONS

For simplicity and clarity of illustration, elements in the figures are not necessarily drawn to scale. The same reference numbers in different figures represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The terminology used herein is for the purpose of describing particular embodiments only and is not intended to limit the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

In addition, it will also be understood that when a first element or layer is referred to as being present "on" or "beneath" a second element or layer, the first element may be disposed directly on or beneath the second element or may be disposed indirectly on or beneath the second element with a third element or layer being disposed between the first and second elements or layers.

It will be understood that when an element or layer is referred to as being "connected to", or "coupled to" another element or layer, it may be directly on, connected to, or coupled to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

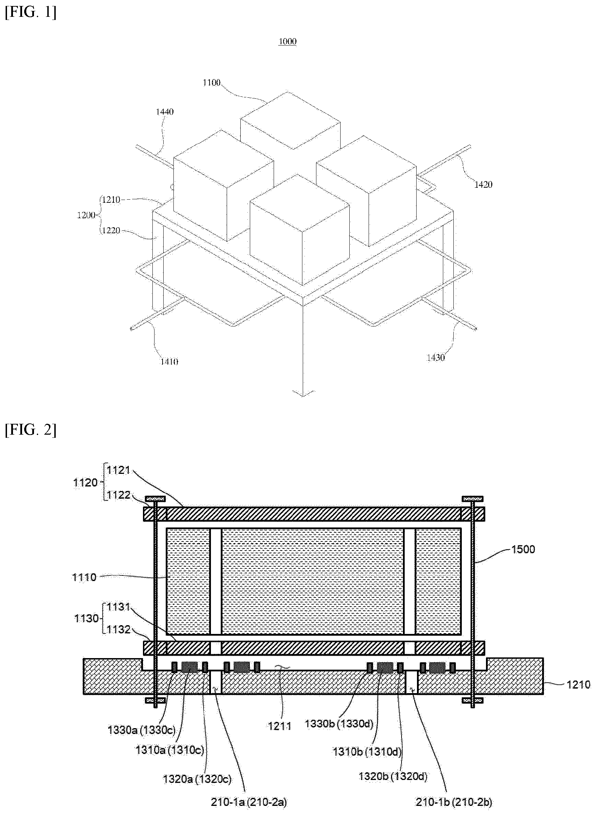

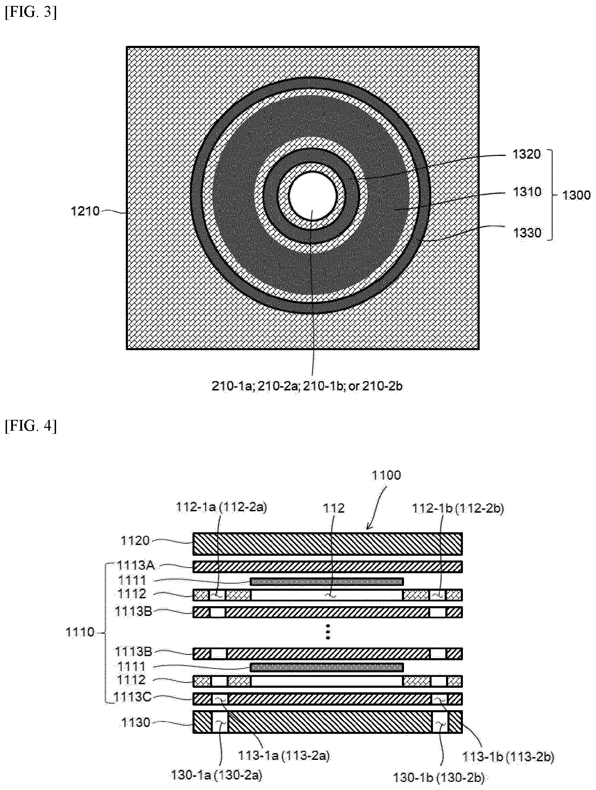

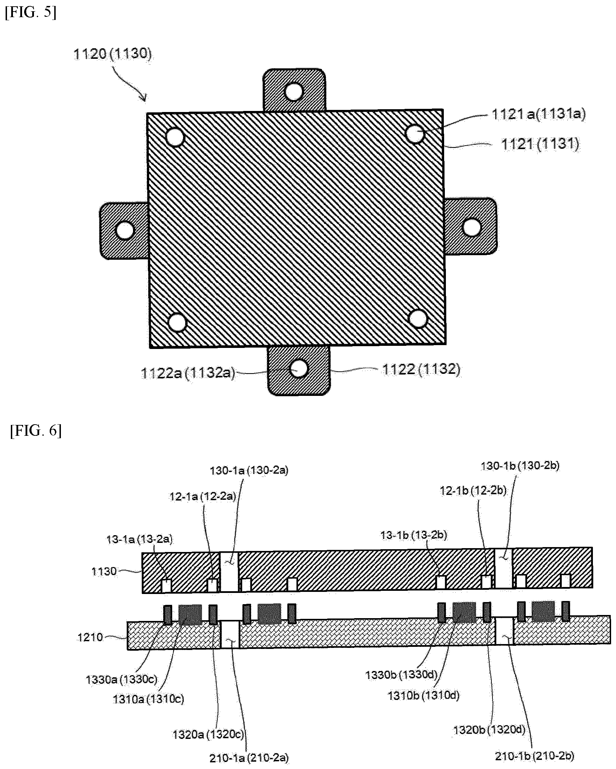

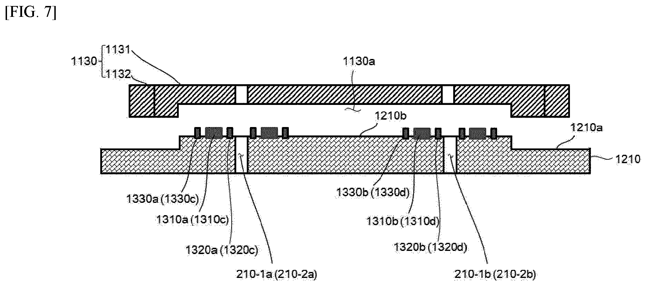

FIG. 1 is a perspective view for describing a fuel cell structure according to an embodiment of the present disclosure. FIG. 2 is a cross-sectional view for describing the fuel cell structure shown in FIG. 1. FIG. 3 is a partial plan view for describing a sealing member shown in FIG. 2. FIG. 4 is a cross-sectional view of the fuel cell stack shown in FIGS. 1 and 2. FIG. 5 is a plan view for describing an upper end plate and a lower end plate of the fuel cell stack. FIG. 6 is a cross-sectional view for describing an embodiment of a sealing structure between a support and the fuel cell stack. FIG. 7 is a cross-sectional view for describing a fuel cell structure according to an embodiment of the present disclosure.

Referring to FIG. 1 to FIG. 7, a fuel cell structure 1000 according to the embodiment of the present disclosure may include at least one fuel cell stack 1100, a support 1200 and sealing member 1300.

The fuel cell stack 1100 may include a stack of a plurality of single fuel cells 1111. A fuel channel through which fuel containing hydrogen (H₂) moves and an air channel through which air containing oxygen (O₂) moves may be formed in the fuel cell stack 1100.

In one embodiment, the fuel cell stack 1100 may include the single cell stack structure 1110, an upper end plate 1120 and a lower end plate 1130.

The single cell stack structure 1110 may include a plurality of single cells 1111, a plurality of cell-frames 1112 supporting edges of the single cells 1111, and a plurality of connectors 1113A, 1113B and 1113C electrically connecting the single cells 1111 to each other.

The single cell stack structure 1110 as described above may have a structure in which the cell-frames 1112 supporting the plurality of single cells 1111 and the connectors 1113 electrically connecting the single cells 1111 to each other are alternately stacked one on top of another.

Each of the single cells 1111 may be a flat single cell of a fuel cell. For example, each of the single cells 1111 may be a flat single cell embodied as a solid oxide fuel cell (SOFC), a polymer electrolyte fuel cell (PEFC), a phosphoric acid fuel cell (PAFC), and a molten carbonate fuel cell (MCFC). Hereinafter, for convenience of description, an example in which the single cell 1111 is embodied as a flat single solid oxide fuel cell is described.

In one embodiment, when the single cells 1111 are flat single solid oxide fuel cells, each of the single cells 1111 may include a first electrode, a second electrode, and a solid oxide electrolyte interposed therebetween. One of the first electrode and the second electrode may act as an anode to which the fuel is supplied, and the other thereof may act as a cathode to which the air is supplied. When fuel containing hydrogen H₂ and air containing oxygen O₂ are supplied to the anode and the cathode, respectively, oxygen ions O²⁻ reduced in the cathode move to the anode through the solid oxide electrolyte due to an oxygen partial pressure difference. The oxygen ions O²⁻ transferred to the anode react with hydrogen H₂ provided to the anode to produce water H₂O and electron e⁻. Each of the single cells 1111 may generate electric energy using the electrons generated via the reaction as described above.

Each of the cell-frames 1112 may support an edge portion of each of the single cells 1111 to improve assembleability and durability of the fuel cell stack 1100. In one embodiment, each of the cell-frames 1112 may have a frame structure in a form of a rectangular frame in which a channel opening 112 exposing one electrode of the first and second electrodes of the supported single cell 1111 is defined in a middle region thereof. Each cell-frame 1112 has a first fuel supply hole 112-1a and a first fuel discharge hole 112-1b defined therein which are spaced apart from each other while the channel opening 112 is disposed therebetween. Each cell-frame 1112 has a first air supply hole 112-2a and a first air discharge hole 112-2b defined therein which are spaced apart from each other while the channel opening 112 is disposed therebetween. The first fuel supply hole 112-1a and the first air supply hole 112-2a may be adjacent to the same corner of the cell-frame 1112 or may be adjacent to different corners, respectively.

The connectors 1113A, 1113B, and 1113C may electrically connect the single cells 1111 to each other and transfer electrical energy generated from the single cells 1111 to an external circuit. To this end, each of the connectors 1113A, 1113B, and 1113C may be made of a conductive ceramic or metal material. For example, each of the connectors 1113A, 1113B, and 1113C may be made of a LaCrO₃ based ceramic material having a perovskite structure or iron (Fe)-chromium (Cr) based metal material. In addition, each of the connectors 1113A, 1113B, and 1113C may have a rectangular plate structure having the same shape as the cell-frame 1112.

In one embodiment, the connectors 1113A, 1113B, and 1113C may include a first connector 1113A disposed between the upper end plate 1120 and a top single cell among the single cells 1111, a plurality of second connectors 1113B disposed between the single cells 1111, and a third connector 1113C disposed between the lower end plate 1130 and a bottom single cell among the single cells 1111.

The second connectors 1113B may electrically connect the single cells 1111 to each other. The first connector 1113A and the third connector 1113C may transfer the electrical energy generated from the single cells 1111 to the external circuit.

Each of at least the second connectors 1113B and the third connector 1113C among the connectors 1113A, 1113B, and 1113C may have a second fuel supply hole 113-1a, a second fuel discharge hole 113-1b, a second air supply hole 113-2a and a second air discharge hole 113-2b defined therein communicating with the first fuel supply hole 112-1a, the first fuel discharge hole 112-1b, the first air supply hole 112-2a and the first air discharge hole 112-2b of the cell-frame 1112 respectively. In one example, the first connector 1113A may have or may not have the second fuel supply hole 113-1a, the second fuel discharge hole 113-1b, the second air supply hole 113-2a, and the second air discharge hole 113-2b defined therein.

The upper end plate 1120 and the lower end plate 1130 define a top and a bottom of the single cell stack structure 1110, respectively, so that a uniform pressure may be applied to the single cell stack structure 1110.

In one embodiment, as shown in FIGS. 2 and 5, the upper end plate 1120 may include a first pressing plate 1121 and a plurality of first fastened portions 1122. The lower end plate 1130 may include a second pressing plate 1131 and a plurality of second fastened portions 1132.

The first pressing plate 1121 and the second pressing plate 1131 may define the top and the bottom of the single cell stack structure 1110, respectively, to pressurize the cells therebetween. Each of the first pressing plate 1121 and the second pressing plate 1131 may have a plate structure of the same shape as the cell frame 1112. The first pressing plate 1121 and the second pressing plate 1131 may have first holes 1121a and 1131a defined therein respectively through which first fasteners (not shown) for fastening the single cell stack structure 1110, the upper end plate 1120 and the lower end plate 1130 to each other pass.

In one embodiment, the second pressing plate 1131 of the lower end plate 1130 may have a third fuel supply hole 130-1a, a third fuel discharge hole 130-1b, a third air supply hole 130-2a, and a third air discharge hole 130-2b defined therein communicating with the second fuel supply hole 113-1a, the second fuel discharge hole 113-1b, the second air supply hole 113-2a and the second air discharge hole 113-2b formed in the third connector 1113C, respectively.

The first to third fuel supply holes 112-1a, 113-1a, and 130-1a and the first to third fuel discharge holes 112-1b, 113-1b, and130-1b may constitute a fuel channel. The first to third air supply holes 112-2a, 113-2a, and 130-2a and the first to third air discharge holes 112-2b, 113-2b, and 130-2b may constitute an air channel. The third fuel supply hole 130-1a and the third fuel discharge hole 130-1b may define an inlet and an outlet of the fuel channel, respectively. The third air supply hole 130-2a and the third air discharge hole 130-2b may define an inlet and an outlet of the air channel, respectively.

The first fastened portions 1122 may be formed to protrude in a horizontal direction from portions of lateral faces of the first pressing plate 1121. The second fastened portions 1132 may be formed to protrude in a horizontal direction from portions of lateral faces of the second pressing plate 1131. The first and second fastened portions 1122 and 1132 may have second holes 1122a and 1132a defined therein respectively through which second fasteners 1500 for fastening the fuel cell stack 1100 to the support 1200 pass. Since the first fastened portion 1122 and the second fastened portion 1132 are formed to protrude in the horizontal direction from the lateral faces of the first pressing plate 1121 and the second pressing plate 1131, respectively, the first fastened portion 1122 and the second fastened portion 1132 do not vertically overlap with the single cell stack structure 1110. As a result, the second fastener 1500 may be disposed outside the single cell stack structure 1110.

In one example, FIG. 5 shows four first fastened portions 1122 and four second fastened portions 1132 protruding from four lateral faces of the first pressing plate 1121 and four lateral faces of the second pressing plate 1131, respectively. However, the present disclosure is not limited thereto. In another example, the upper end plate 1120 and the lower end plate 1130 may have two first fastened portions 1122 and two second fastened portions 1132 protruding from two opposite lateral faces of the first pressing plate 1121 and two opposite lateral faces of the second pressing plate 1131, respectively.

In one example, FIG. 2 shows that both the upper end plate 1120 and the lower end plate 1130 have the fastened portions 1122 and 1132, respectively. However, the present disclosure is not limited thereto. In another example, only one of the upper end plate 1120 and lower end plate 1130 may have the fastened portion 1122 or 1132 for fastening the same to the support 1200. For example, only the lower end plate 1130 may have the fastened portion 1132.

The support 1200 may be disposed below the at least one fuel cell stack 1100 to support the stack 1100. The support 1200 may be connected to a fuel supply pipe 1410 connected to an external fuel supply (not shown) to supply fuel to the fuel cell stack 1100 and to a fuel discharge pipe 1420 through which fuel discharged from the fuel cell stack 1100 moves.

In one example, the support 1200 may be additionally connected to an air supply pipe 1430 connected to an external air supply (not shown) to supply air to the fuel cell stack 1100 and to an air discharge pipe 1440 through which air discharged from the fuel cell stack 1100 moves.

In one embodiment, the support 1200 may have a fourth fuel supply hole 210-a, a fourth fuel discharge hole 210-1b, a fourth air supply hole 210-2a and a fourth air discharge hole 210-2b defined therein communicating with the third fuel supply hole 130-1a, the third fuel discharge hole 130-1b, the third air supply hole 130-2a and the third air discharge hole 130-2b of the lower end plate 1130 respectively. The fuel supply pipe 1410, the fuel discharge pipe 1420, the air supply pipe 1430 and the air discharge pipe 1440 may be connected to the fourth fuel supply hole 210-1a, the fourth fuel discharge hole 210-1b, the fourth air supply hole 210-2a and the fourth air discharge hole 210-2b, respectively.

In one embodiment, the support 1200 may include a support plate 1210 directly supporting the fuel cell stack 1100, and a plurality of support legs 1220 protruding from a bottom face of the support plate 1210 to allow the support plate 1210 to be apart from an installation surface.

The support plate 1210 may have a fourth fuel supply hole 210-1a, a fourth fuel discharge hole 210-1b, a fourth air supply hole 210-2a, and a fourth air discharge hole 210-2b defined therein. The fuel supply pipe 1410, the fuel discharge pipe 1420, the air supply pipe 1430 and the air discharge pipe 1440 may be coupled to a bottom face of the support plate 1210 and may be connected to the fourth fuel supply hole 210-1a, the fourth fuel discharge hole 210-1b, the fourth air supply hole 210-2a and the fourth air discharge hole 210-2b, respectively.

In one embodiment, as shown in FIG. 2, a first movement-prevention groove 1211 may be formed in a top face of the support plate 1210 such that a portion of the fuel cell stack 1100, for example, at least a portion of the lower end plate 1130 is fixedly received in the groove 1211. The first movement-prevention groove 1211 may have a flat bottom face, and may have a flat shape and a size similar to the frame of the lower end plate 1130. The first movement-prevention groove 1211 may have a vertical dimension such that the lower end plate 1130 may be at least partially received in the groove 1211.

In another embodiment, as shown in FIG. 7, a top face of the support plate 1210 may have a first region 1210a extending along an edge portion thereof, and a second region 1210b surrounded with the first region 1210a and, protruding in a stepwise manner upwardly of the first region 1210a. A second movement-prevention groove 1130a into which the second region 1210b of the support plate 1210 may be inserted may be formed in a bottom face of the lower end plate 1130 of the fuel cell stack 1100. The second movement-prevention groove 1130a may have a flat bottom face and may have a planar shape and a size similar to the second region 1210b. The second movement-prevention groove 1130a may have a vertical dimension corresponding to a difference between heights of the first region 1210a and the second region 1210b.

In one example, in this case, the sealing member 1300 may be disposed between the second region 1210b and a bottom face of the second movement-prevention groove 1130a, as shown in FIG. 7.

When the fuel cell stack 1100 moves while contacting the support 1200, the fuel cell stack 1100 may move with respect to the support 1200. In this case, the sealing member 1300 disposed between the fuel cell stack 1100 and the support 1200 may be damaged. Thus, when the first movement-prevention groove 1211 is formed in the support plate 1210 of the support 1200 or the second movement-prevention groove 1130a is formed in the bottom face of the lower end plate 1130, the above problem may be solved.

The support legs 1220 are not particularly limited in terms of a structure or a shape as long as they may stably support the support plate 1210 to be spaced from the installation surface.

The sealing member 1300 may be disposed between the support 1200 and the fuel cell stack 1100, and may seal the fourth fuel supply hole 210-1a, the fourth fuel discharge hole 210-1b, the fourth air supply hole 210-2a and the fourth air discharge hole 210-2b defined in the support, and the third fuel supply hole 130-1a, the third fuel discharge hole 130-1b, the third air supply hole 130-2a and the third air discharge hole 130-2b defined in the lower end plate 1130 and in communication therewith, respectively, thereby to prevent leakage of the fuel or air from a space between the support 1200 and the fuel cell stack 1100.

In one embodiment, the sealing member 1300 may include a ring-shaped compressive seal 1310 made of ceramic material having a relatively high melting temperature, and disposed between the top face of the support and the bottom face of the lower end plate, and surrounding a top of at least one of the fourth fuel supply hole 210-1a, the fourth fuel discharge hole 210-1b, the fourth air supply hole 210-2a, and the fourth air discharge hole 210-2b, and a ring-shaped inner high temperature-resistant seal 1320 and a ring-shaped outer high temperature-resistant seal 1330 arranged to surround the top of at least one of the fourth fuel supply hole 210-1a, the fourth fuel discharge hole 210-1b, the fourth air supply hole 210-2a, and the fourth air discharge hole 210-2b, wherein the ring-shaped inner high temperature-resistant seal 1320 and the ring-shaped outer high temperature-resistant seal 1330 are spaced apart from each other, while the compressive seal 1310 is interposed therebetween.

The compressive seal 1310 may be made of a ceramic material having a melting temperature above a working temperature of the solid oxide fuel cell, and may be made, for example, mica. The compressive seal 1310 may have a ring shape having a flat top face and a flat bottom face. Each of the inner and outer high temperature-resistant seals 1320 and 1330 may be made of a glass material, a composite material of glass and ceramic, etc. having a lower melting temperature than that of the compressive seal 1310, and may have a ring shape with a flat top face and a flat bottom face.

In one embodiment, a height of each of the inner and outer high temperature-resistant seals 1320 and 1330 may be greater than a height of the compressive seal 1310. In this case, one of a top face of the support plate 1210 and a bottom face of the lower end plate 1130 may have inner receiving grooves 12-1a, 12-1b, 12-2a, and 12-2b and outer receiving grooves 13-1a, 13-1b, 13-2a, and 13-2b defined therein into which ends of the inner and outer high temperature-resistant seals 1320 and 1330 are inserted, respectively.

In one embodiment, the compressive seal 1310 may include first to fourth compressive seals 1310a, 1310b, 1310c, and 1310d surrounding tops of the fourth fuel supply hole 210-1a, the fourth fuel discharge hole 210-1b, the fourth air supply hole 210-2a and the fourth air discharge hole 210-2b, respectively. The inner high temperature-resistant seal 1320 may include first to fourth inner high temperature-resistant seals 1320a, 1320b, 1320c, and 1320d, which are disposed inwardly of the first to fourth compressive seals 1310a, 1310b, 1310c, and 1310d, respectively. The outer high temperature-resistant seal 1330 may include first to fourth outer high temperature-resistant seals 1330a, 1330b, 1330c, and 1330d surrounding the first to fourth compressive seals 1310a, 1310b, 1310c, and 1310d, respectively. Each of cross-sectional areas of the first to fourth compressive seals 1310a, 1310b, 1310c, and 1301d may be greater than that of each of the first to fourth inner high temperature-resistant seals 1320a, 1320b, 1320c, and 1320d and the first to fourth outer high temperature-resistant seals 1330a, 1330b, 1330c, and 1330d.

In one example, when a height of each of the first to fourth compressive seals 1310a, 1310b, 1310c, and 1301d is greater than a height of each of the first to fourth inner high temperature-resistant seals 1320a, 1320b, 1320c, and 1320d and the first to fourth outer high temperature-resistant seals 1330a, 1330b, 1330c, and 1330d, one of the top face of the support plate 1210 and the bottom face of the lower end plate 1130 may have the first to fourth inner receiving grooves 12-1a, 12-1b, 12-2a, and 12-2b surrounding the third fuel supply hole 130-1a, the third fuel discharge hole 130-1b, the third air supply hole 130-2a, and the third air discharge hole 130-2b, respectively, and receiving ends of the first to fourth inner high temperature-resistant seals 1320a, 1320b, 1320c and 1320d, respectively; and the first to fourth outer receiving grooves 13-1a, 13-1b, 13-2a, and 13-2b surrounding the first to fourth inner receiving grooves 12-1a, 12-1b, and 12-2a, 12-2b respectively, and receiving ends of the first to fourth outer high temperature-resistant seals 1330a, 1330b, 1330c, and 1330d, respectively. Flat top faces of the first to fourth inner receiving groove 12-1a, 12-1b, 12-2a, and 12-2b and the first to fourth outer receiving groove 13-1a, 13-1b, 13-2a, and 13-2b may be flush with flat top faces of the first to fourth inner high temperature-resistant seals 1320a, 1320b, 1320c, and 1320d and the first to fourth outer high temperature-resistant seals 1330a, 1330b, 1330c, and 1330d.

According to the solid oxide fuel cell structure according to the present disclosure, the sealing member includes the compressive seal and the high temperature-resistant seal. Thus, even when an application area of the high temperature-resistant seal is reduced, sealing effect of fuel and air may be stably secured. Therefore, the application area of the high temperature-resistant seal may be reduced. As a result, the fuel cell stack may be easily detached from the support at room temperature.

Moreover, when glass is used as material for the high temperature-resistant seal, there is a problem that sealing effect decreases at low temperatures. However, in the fuel cell structure according to the present disclosure, the sealing member includes the compressive seal and the high temperature-resistant seal. Thus, the fuel cell structure may reliably seal the fuel and air even at relatively low temperatures below a melting temperature of the high temperature-resistant seal.

Further, connecting the fuel supply/discharge pipe and the air supply/discharge pipe not to the fuel cell stack but to the support capable of supporting the fuel cell stack may allow a process of installing and uninstalling the fuel cell structure and replacing the stack to be simplified. Placing the sealing member between the support and the fuel cell stack may allow the fuel and air to be sealed stably.

Further, the fastened portion may be formed at each of the upper end plate and the lower end plate of the fuel cell stack, and the fuel cell stack and the support may be fastened to each other via the fastener extending through the fastened portion. Thus, the sealing member disposed between the fuel cell stack and the support may be prevented from being damaged, which may otherwise occur when the fuel cell stack is moved. Further, the first movement-prevention groove that may fixedly accommodate the fuel cell stack may be defined in the top face of the support, or the second movement-prevention groove in which the protruding region of the support may be fixedly inserted may be defined in the bottom face of the lower end plate, thereby to more reliably prevent the fuel cell stack from moving relative to the support.

As described above, the present disclosure is described with reference to the drawings. However, the present disclosure is not limited to the embodiments and drawings disclosed in the present specification. It will be apparent that various modifications may be made thereto by those skilled in the art within the scope of the present disclosure. Furthermore, although the effect resulting from the features of the present disclosure has not been explicitly described in the description of the embodiments of the present disclosure, it is obvious that a predictable effect resulting from the features of the present disclosure should be recognized.

## Claims

1. A fuel cell structure 1000 comprising:
at least one fuel cell stack 1100 in which a fuel channel and air channel areformed, the fuel cell stack including:
an upper end plate 1120 having a first pressing plate 1121, and at least one first fastened portion 1122 protruding in a horizontal direction from at least one lateral face of the first pressing plate;
a lower end plate 1130 having a second pressing plate 1131 opposite to the first pressing plate and at least one second fastened portion 1132 protruding in a horizontal direction from at least one of lateral face of the second pressing plate; and
a stack structure 1110 of single cells disposed between the first pressing plate and the second pressing plate;a support 1200 including a support plate 1210 disposed on a bottom of the fuel cell stack 1110 to support the fuel cell stack 1110; anda fastener extending through the first fastened portion, the second fastened portion and the support plate to fasten the fuel cell stack 1100 to the support 1120,
**characterized in that**
- the second pressing plate 1131 comprises a first fuel supply hole 130-1a defining an inlet of the fuel channel and a first air supply hole 130-2a defining an inlet of the air channel,
- the support plate 1210 comprises a second fuel supply hole 210-1a to which a fuel supply pipe configured to supply fuel to the fuel channel is connected and a second air supply hole 210-2a to which an air supply pipe 1430 configured to supply air to the air channel is connected,
- the second fuel supply hole 210-1a and the second air supply hole 210-2a respectively communicate with the first fuel supply hole 130-1a and the first air supply hole 130-2a.

2. The fuel cell structure of claim 1,
- wherein the second pressing plate 1131 comprises a first fuel discharge hole 130-1b defining an outlet of the fuel channel and a first air discharge hole 130-2b defining an outlet of the air chann
- wherein the support plate 12101120 further comprises a second fuel discharge hole 210-1b to which fuel discharging pipe configured to discharge exhaust fuel from the fuel channel is connected and a second air discharge hole 210-2b to which a air discharging pipe 1440 configured to discharge exhaust air from the air channel is connected,
- wherein sealing member 1300 further seals a third space around the first fuel discharge hole 130-1b and the second fuel discharge hole 210-1b and a fourth space around the first air discharge hole 130-2b and the second air discharge hole 210-2b.

3. The fuel cell structure of claim 2, wherein the compressive seal 1310 is disposed between a top face of the support plate and a bottom face of the lower end plate and has a ring shape to surround a top of at least one of the fuel supply hole and the fuel discharge hole,
wherein the high temperature-resistant seal includes a ring-shaped inner high temperature-resistant seal 1320 surrounded with the compressive seal and disposed between the top face of the support plate and the bottom face of the lower end plate, wherein the ring-shaped inner high temperature-resistant seal 1320 surrounds a top of at least one of the fuel supply hole and the fuel discharge hole.

4. The fuel cell structure of claim 3, wherein the high temperature-resistant seal includes a ring-shaped outer high temperature-resistant seal 1330 surrounding the compressive seal and disposed between the top face of the support plate and the bottom face of the lower end plate, wherein the ring-shaped inner high temperature-resistant seal 1330 surrounds a top of at least one of the fuel supply hole and the fuel discharge hole.

5. The fuel cell structure of claim 3 or 4, wherein each of the inner high temperature-resistant seal and the outer high temperature-resistant seal is made of a glass material or a composite material of glass and ceramic,
wherein the compressive seal is made of ceramic material.

6. The fuel cell structure of claim 4, wherein the compressive seal includes first and second compressive seals 1310a and 1310b surrounding tops of the fuel supply hole and the fuel discharge hole, respectively,
wherein the inner high temperature-resistant seal includes first and second inner high temperature-resistant seals 1320a and 1320b surrounded with the first and second compressive seals, respectively,
wherein the outer high temperature-resistant seal includes first and second outer high temperature-resistant seals 1330a and 1330b surrounding the first and second compressive seals, respectively.

7. The fuel cell structure of claim 1, wherein a first movement-prevention groove 1211 is defined in a top face of the support plate into which at least a portion of the lower end plate is inserted.

8. The fuel cell structure of claim 1, wherein a top face of the support plate 1210 has a first region 1210a extending along an edge portion thereof, and a second region 1210b surrounded with the first region 1210a and, protruding in a stepwise manner upwardly of the first region 1210a,
wherein a second movement-prevention groove 1130a into which the second region is inserted is defined in a bottom face of the lower end plate.

9. The fuel cell structure of claim 8, wherein the sealing member is disposed between the second region and a bottom face of the second movement-prevention groove.

## Patentansprüche

1. Brennstoffzellenstruktur 1000, umfassend:
mindestens einen Brennstoffzellenstapel 1100, in dem ein Brennstoffkanal und Luftkanal gebildet sind, wobei der Brennstoffzellenstapel beinhaltet:
eine obere Endplatte 1120 mit einer ersten Pressplatte 1121 und mindestens einem ersten befestigten Abschnitt 1122, der in einer horizontalen Richtung von mindestens einer seitlichen Seite der ersten Pressplatte vorspringt;
eine untere Endplatte 1130 mit einer zweiten Pressplatte 1131, die der ersten Pressplatte gegenüberliegt, und mindestens einem zweiten befestigten Abschnitt 1132, der in einer horizontalen Richtung von mindestens einer seitlichen Seite der zweiten Pressplatte vorspringt; und
eine Stapelstruktur 1110 aus einzelnen Zellen, die zwischen der ersten Pressplatte und der zweiten Pressplatte angeordnet ist; einen Träger 1200, der eine Trägerplatte 1210 beinhaltet, die an einem Boden des Brennstoffzellenstapels 1110 angeordnet ist, um den Brennstoffzellenstapel 1110 zu tragen; und ein Befestigungsmittel, das sich durch den ersten befestigten Abschnitt, den zweiten befestigten Abschnitt und die Trägerplatte erstreckt, um den Brennstoffzellenstapel 1100 am Träger 1200 zu befestigen,
**dadurch gekennzeichnet, dass**
- die zweite Pressplatte 1131 ein erstes Brennstoffzufuhrloch 130-1a, das einen Einlass des Brennstoffkanals definiert, und ein erstes Luftzufuhrloch 130-2a umfasst, das einen Einlass des Luftkanals definiert,
- die Trägerplatte 1210 ein zweites Brennstoffzufuhrloch 210-1a, mit dem ein Brennstoffzufuhrrohr, das konfiguriert ist, um Brennstoff zum Brennstoffkanal zuzuführen, verbunden ist, und ein zweites Luftzufuhrloch 210-2a umfasst, mit dem ein Luftzufuhrrohr 1430, das konfiguriert ist, um Luft zum Luftkanal zuzuführen, verbunden ist,
- das zweite Brennstoffzufuhrloch 210-1a und das zweite Luftzufuhrloch 210-2a mit dem ersten Brennstoffzufuhrloch 130-1a bzw. dem ersten Luftzufuhrloch 130-2a kommunizieren.

2. Brennstoffzellenstruktur nach Anspruch 1,
- wobei die zweite Pressplatte 1131 ein erstes Brennstoffausstoßloch 130-1b, das einen Auslass des Brennstoffkanals definiert, und ein erstes Luftausstoßloch 130-2b umfasst, das einen Auslass des Luftkanals definiert,
- wobei die Trägerplatte 1210 weiter ein zweites Brennstoffausstoßloch 210-1b, mit dem ein Brennstoffausstoßrohr, das konfiguriert ist, um Brennstoffabgas aus dem Brennstoffkanal auszustoßen, verbunden ist, und ein zweites Luftausstoßloch 210-2b umfasst, mit dem ein Luftausstoßrohr 1440, das konfiguriert ist, um Abluft aus dem Luftkanal auszustoßen, verbunden ist,
- wobei Dichtungselement 1300 weiter einen dritten Raum um das erste Brennstoffausstoßloch 130-1b und das zweite Brennstoffausstoßloch 210-1b, und einen vierten Raum um das erste Luftausstoßloch 130-2b und das zweite Luftausstoßloch 210-2b abdichtet.

3. Brennstoffzellenstruktur nach Anspruch 2, wobei die Druckdichtung 1310 zwischen einer Oberseite der Trägerplatte und einer Unterseite der unteren Endplatte angeordnet ist und eine Ringform aufweist, um eine Oberseite von mindestens einem aus dem Brennstoffzufuhrloch und dem Brennstoffausstoßloch zu umgeben,
wobei die hochtemperaturbeständige Dichtung eine ringförmige innere hochtemperaturbeständige Dichtung 1320 beinhaltet, die mit der Druckdichtung umgeben und zwischen der Oberseite der Trägerplatte und der Unterseite der unteren Endplatte angeordnet ist, wobei die ringförmige innere hochtemperaturbeständige Dichtung 1320 eine Oberseite von mindestens einem aus dem Brennstoffzufuhrloch und dem Brennstoffausstoßloch umgibt.

4. Brennstoffzellenstruktur nach Anspruch 3, wobei die hochtemperaturbeständige Dichtung eine ringförmige äußere hochtemperaturbeständige Dichtung 1330 beinhaltet, die die Druckdichtung umgibt und zwischen der Oberseite der Trägerplatte und der Unterseite der unteren Endplatte angeordnet ist, wobei die ringförmige innere hochtemperaturbeständige Dichtung 1330 eine Oberseite von mindestens einem aus dem Brennstoffzufuhrloch und dem Brennstoffausstoßloch umgibt.

5. Brennstoffzellenstruktur nach Anspruch 3 oder 4, wobei jede aus der inneren hochtemperaturbeständigen Dichtung und der äußeren hochtemperaturbeständigen Dichtung aus einem Glasmaterial oder einem Verbundmaterial aus Glas und Keramik besteht,
wobei die Druckdichtung aus Keramikmaterial besteht.

6. Brennstoffzellenstruktur nach Anspruch 4, wobei die Druckdichtung eine erste und eine zweite Druckdichtung 1310a und 1310b beinhaltet, die Oberseiten des Brennstoffzufuhrlochs bzw. des Brennstoffausstoßlochs umgeben,
wobei die innere hochtemperaturbeständige Dichtung eine erste und eine zweite innere hochtemperaturbeständige Dichtung 1320a und 1320b beinhaltet, die mit der ersten bzw. zweiten Druckdichtung umgeben sind,
wobei die äußere hochtemperaturbeständige Dichtung eine erste und eine zweite äußere hochtemperaturbeständige Dichtung 1330a und 1330b beinhaltet, die die erste bzw. zweite Druckdichtung umgeben.

7. Brennstoffzellenstruktur nach Anspruch 1, wobei eine erste Bewegungsverhinderungsnut 1211 in einer Oberseite der Trägerplatte definiert ist, in die mindestens ein Abschnitt der unteren Endplatte eingefügt ist.

8. Brennstoffzellenstruktur nach Anspruch 1, wobei eine Oberseite der Trägerplatte 1210 eine erste Region 1210a, die sich entlang eines Randabschnitts derselben erstreckt, und eine zweite Region 1210b aufweist, die mit der ersten Region 1210a umgeben ist und stufenartig von der ersten Region 1210a nach oben vorspringt,
wobei eine zweite Bewegungsverhinderungsnut 1130a, in die die zweite Region eingefügt ist, in einer Unterseite der unteren Endplatte definiert ist.

9. Brennstoffzellenstruktur nach Anspruch 8, wobei das Dichtungselement zwischen der zweiten Region und einer Unterseite der zweiten Bewegungsverhinderungsnut angeordnet ist.

## Revendications

1. Structure d'éléments à combustible 1000 comprenant :
au moins un empilement d'éléments à combustible 1100 dans lequel un canal de combustible et un canal d'air sont formés, l'empilement d'éléments à combustible incluant :
une plaque d'extrémité supérieure 1120 présentant une première plaque de pression 1121, et au moins une première partie fixée 1122 faisant saillie dans une direction horizontale à partir d'au moins une face latérale de la première plaque de pression ;
une plaque d'extrémité inférieure 1130 présentant une seconde plaque de pression 1131 à l'opposé de la première plaque de pression et au moins une seconde partie fixée 1132 faisant saillie dans une direction horizontale à partir d'au moins une face latérale de la seconde plaque de pression ; et
une structure d'empilement 1110 d'éléments individuels disposée entre la première plaque de pression et la seconde plaque de pression ; un support 1200 incluant une plaque de support 1210 disposée sur un fond de l'empilement d'éléments à combustible 1110 de manière à supporter l'empilement d'éléments à combustible 1110 ; et un dispositif de fixation s'étendant à travers la première partie fixée, la seconde partie fixée et la plaque de support pour fixer l'empilement d'éléments à combustible 1100 au support 1200,
**caractérisée en ce que**
- la seconde plaque de pression 1131 comprend un premier trou de délivrance de combustible 130-1a définissant une entrée du canal de combustible et un premier trou de délivrance d'air 130-2a définissant une entrée du canal d'air,
- la plaque de support 1210 comprend un second trou de délivrance de combustible 210-1a auquel est connecté un tuyau de délivrance de combustible configuré pour délivrer du combustible au canal de combustible et un second trou de délivrance d'air 210-2a auquel est connecté un tuyau de délivrance d'air 1430 configuré pour délivrer de l'air au canal d'air,
- le second trou de délivrance de combustible 210-1a et le second trou de délivrance d'air 210-2a communiquent respectivement avec le premier trou de délivrance de combustible 130-1a et le premier trou de délivrance d'air 130-2a.

2. Structure d'éléments à combustible selon la revendication 1,
- dans laquelle la seconde plaque de pression 1131 comprend un premier trou d'évacuation de combustible 130-1b définissant une sortie du canal de combustible et un premier trou d'évacuation d'air 130-2b définissant une sortie du canal d'air,
- dans laquelle la plaque de support 1210 comprend en outre un second trou d'évacuation de combustible 210-1b auquel est connecté un tuyau d'évacuation de combustible configuré pour évacuer un combustible d'échappement hors du canal de combustible et un second trou d'évacuation d'air 210-2b auquel est connecté un tuyau d'évacuation d'air 1440 configuré pour évacuer l'air d'échappement hors du canal d'air,
- dans laquelle une pièce d'étanchéité 1300 assure en outre l'étanchéité d'un troisième espace autour du premier trou d'évacuation de combustible 130-1b et du second trou d'évacuation de combustible 210-1b et d'un quatrième espace autour du premier trou d'évacuation d'air 130-2b et du second trou d'évacuation d'air 210-2b.

3. Structure d'éléments à combustible selon la revendication 2, dans laquelle le joint compressif 1310 est disposé entre une face supérieure de la plaque de support et une face inférieure de la plaque d'extrémité inférieure et présente une forme annulaire de façon à entourer une partie supérieure d'au moins un trou parmi le trou de délivrance de combustible et le trou d'évacuation de combustible,
dans laquelle le joint résistant aux températures élevées inclut un joint interne annulaire résistant aux températures élevées 1320 entouré du joint compressif et disposé entre la face supérieure de la plaque de support et la face inférieure de la plaque d'extrémité inférieure, dans laquelle le joint interne annulaire résistant aux températures élevées 1320 entoure une partie supérieure d'au moins un trou parmi le trou de délivrance de combustible et le trou d'évacuation de combustible.

4. Structure d'éléments à combustible selon la revendication 3, dans laquelle le joint résistant aux températures élevées inclut un joint externe annulaire résistant aux températures élevées 1330 entourant le joint compressif et disposé entre la face supérieure de la plaque de support et la face inférieure de la plaque d'extrémité inférieure, dans laquelle le joint interne annulaire résistant aux températures élevées 1330 entoure une partie supérieure d'au moins un trou parmi le trou de délivrance de combustible et le trou d'évacuation de combustible.

5. Structure d'éléments à combustible selon la revendication 3 ou 4, dans laquelle chacun du joint interne résistant aux températures élevées et du joint externe résistant aux températures élevées est fabriqué dans une matière vitreuse ou une matière composite constituée de verre et de céramique,
dans laquelle le joint compressif est fabriqué dans une matière céramique.

6. Structure d'éléments à combustible selon la revendication 4, dans laquelle le joint compressif inclut des premier et second joints compressifs 1310a et 1310b entourant des parties supérieures du trou de délivrance de combustible et du trou d'évacuation de combustible, respectivement,
dans laquelle le joint interne résistant aux températures élevées inclut des premier et second joints internes résistants aux températures élevées 1320a et 1320b entourés des premier et second joints compressifs, respectivement,
dans laquelle le joint externe résistant aux températures élevées inclut des premier et second joints externes résistants aux températures élevées 1330a et 1330b entourant les premier et second joints compressifs, respectivement.

7. Structure d'éléments à combustible selon la revendication 1, dans laquelle une première cavité de prévention de mouvement 1211 est définie dans une face supérieure de la plaque de support dans laquelle au moins une partie de la plaque d'extrémité inférieure est insérée.

8. Structure d'éléments à combustible selon la revendication 1, dans laquelle une face supérieure de la plaque de support 1210 présente une première région 1210a s'étendant le long d'une partie périphérique de celle-ci, et une seconde région 1210b entourée de la première région 1210a et faisant saillie en gradin vers le haut depuis la première région 1210a,
dans laquelle une seconde cavité de prévention de mouvement 1130a dans laquelle la seconde région est insérée est définie dans une face inférieure de la plaque d'extrémité inférieure.

9. Structure d'éléments à combustible selon la revendication 8, dans laquelle la pièce d'étanchéité est disposée entre la seconde région et une face inférieure de la seconde cavité de prévention de mouvement.
